# EUROPÄISCHE PATENTSCHRIFT

(11) **EP 0 274 125 B1**
(45) Veröffentlichungstag und Bekanntmachung des Hinweises auf die Patenterteilung: **31.03.1993**
(21) Anmeldenummer: 87119238.1
(22) Anmeldetag: 24.12.1987
(51) Int. Cl.: B62B 13/18

(54) **Schlitten, insbesondere Rodelschlitten**
Sledge with runners, in particular a toboggan
Traîneau à patins, en particulier toboggan

(30) Priorität: 03.01.1987 DE 8700097 U
(43) Veröffentlichungstag der Anmeldung: 13.07.1988
(73) Patentinhaber: Zitterich, Uwe, D-26133 Oldenburg (DE)
(72) Erfinder: Zitterich, Uwe, D-26133 Oldenburg (DE)
(74) Vertreter: Jabbusch, Wolfgang, Dr.Jur. Jabbusch, Wehser & Lauerwald Patentanwälte

(56) Entgegenhaltungen:
- EP-A- 0 063 179
- FR-A- 425 191
- US-A- 1 866 115
- US-A- 2 647 759
- US-A- 4 159 119

## Beschreibung

Die Erfindung betrifft einen Schlitten mit Kufen, insbesondere Rodelschlitten, mit einem lösbar angeordneten Fahrwerk mit drehbar gelagerten Rollelementen, deren Laufflächen aus der Kufenebene des Schlittens nach unten vorragen, wobei die Rollelemente paarweise angeordnet sind und jeweils ein Paar von Rollelementen auf einer gemeinsamen Achse gelagert ist, die Achsen der Paare von Rollelementen in ihrem Abstand zueinander veränderbar angeordnet sind und jedes Paar von Rollelementen lösbar am Schlitten über eine eigene Halterung befestigbar ist, die einen sich quer zu den Kufen erstreckenden längenverstellbaren Träger aufweist, an dessen Unterseite die Achse des Paares von Rollelementen parallel zum Träger angeordnet ist und der Träger an seinen Enden jeweils ein als Klemme ausgebildetes Befestigungsorgan aufweist, wobei jede Klemme eine an jedem Ende des Trägers angeordnete Festbacke und eine bewegliche Losbacke aufweist, die an den Kufenholmen des Schlittens anlegbar sind und jede Klemme ein Betätigungsorgan zur Einstellung des Abstandes zwischen den Backen aufweist.

Ein Schlitten der vorbezeichneten Gattung ist nach der US-A-1 866 115 bekannt. Der bekannte Schlitten kann an schneefreien Tagen, insbesondere für Sport und Spiel, als Fahrzeug benutzt werden. Nach Abnahme des Fahrwerkes kann der Schlitten in herkömmlicher Weise zum Fahren im Schnee benutzt werden. Schneearme oder schneefreie Stellen können im Winter beim Ziehen des Schlittens durch ein zeitweiliges Anmontieren des Fahrwerkes in vorteilhafter Weise überbrückt werden.

Bei dem bekannten Schlitten erfordert dies umfangreiche Umrüst- und Montagearbeiten, die von einem Kind kaum durchführbar sind.

Darüber hinaus erfordert die Halterung der vorderen Rollelemente einen Rodelschlitten, der mit einer Fußlenkstange ausgerüstet ist, da Teile der Halterung mit der Schlittenlenkstange verbunden werden müssen, um eine sichere Befestigung zu erreichen. Der bekannte Schlitten ist damit ein Spezialschlitten. Normale Schlitten ohne Lenkstange sind mit dem bekannten Fahrwerk nicht ausrüstbar. Damit der bekannte Schlitten mit Fahrwerk lenkbar ist, weist er eine manuell betätigbare Steuerung auf. Dazu sind die vorderen Rollelemente nach Art einer Drehschemellenkung ausgebildet.

Der Erfindung liegt die Aufgabe zugrunde, einen serienmäßigen, einfachen Kinder-Rodelschlitten mit einem lenkbaren Fahrwerk so auszubilden, daß Umrüstarbeiten vom Schneebetrieb auf Fahrbetrieb auf ein auch von Kindern beherrschbares Minimum beschränkt sind.

Diese Aufgabe ist erfindungsgemäß dadurch gelöst worden, daß jede Achse jeweils nur in ihrem mittleren Bereich an einem Punkt über eine Aufhängung elastisch aufgehängt und um diesen Punkt kippbar ist, daß jede Aufhängung an dem zugeordneten Träger um den Träger schwenkbar gehalten ist und daß Feststellmittel zur Arretierung der Aufhängung in Schwenkendstellungen vorgesehen sind.

Die elastische, um einen Punkt kippbare Aufhängung hat den Vorteil, daß der Schlitten bei Fahrbetrieb mittels der Rollelemente allein durch eine Gewichtsverlagerung des Fahrers lenkbar ist. Die Schwenkbarkeit der Aufhängung um den Träger hat den Vorteil, daß jede mit Rollelementen versehene Achse unter Verbleib am Schlitten aus der Rollbetriebsstellung herausgeklappt werden kann, so daß der Schlitten sofort ohne weitere Umrüstung im Schlittenbetrieb nutzbar ist. Bei Bedarf können die Achsen jederzeit schnell wieder in die Rollbetriebsstellung gebracht werden. Zur Arretierung der Aufhängungen in Schwenkendstellungen sind Feststellmittel vorzugsweise mit Anschlägen und Schraubklemmen vorgesehen.

Eine bevorzugte Ausbildung der Erfindung zeichnet sich dadurch aus, daß die Aufhängung einen zu der an ihr befestigten Achse querverlaufenden zu seinem der Achse abgewandten Ende bezüglich der Lotrechten in Fahrtrichtung des Schlittens geneigten bolzenförmigen Kern aufweist, auf den ein Auge eines mit der Achse verbundenen Befestigungselementes beweglich aufgeschoben ist, und daß das Auge zwischen zwei auf dem Kern sitzenden Ringscheiben aus elastischem Werkstoff gehalten ist. Beim Fahrbahnkontakt sämtlicher Rollelemente kann der Schlitten bezüglich seines Fahrwerkes durch eine Gewichtsverlagerung des Fahrers geneigt werden, indem sich der Fahrer beispielsweise in Kurven hineinlegt, wodurch eine Richtungsbestimmung des Schlittens durch den Fahrer möglich ist. Aufgrund der elastischen Ringscheiben, die an den Augen der Befestigungselemente der Achsen anliegen, kehrt der Schlitten bei Beendigung der Gewichtseinwirkungen des Fahrers jeweils wieder in seine Ruhelage zurück.

Der Kern der Aufhängung ist vorzugsweise ein Gewindebolzen, der an seinem freien Ende einen Kopf aufweist, und die Ringscheiben sind zusammen mit dem Auge zwischen dem Kopf des Gewindebolzens und einer Kontermutter eingespannt. Durch Anziehen des Gewindebolzens können die elastischen Ringscheiben vorgespannt werden, so daß mit Vorteil eine weichere oder härtere Lenkung des Schlittens eingestellt werden kann bzw. eine Lenkbarkeit des Schlittens vollständig unterbunden werden kann.

Eine möglichst sichere Fahrbahnhaftung der Rollelemente wird dadurch erreicht, daß die Rollelemente walzenförmige Rollen sind. An unterschiedliche Fahrbahnverhältnisse kann der erfindungsgemäße Schlitten mit Vorteil dadurch angepaßt werden, daß die Rollelemente auswechselbar angeordnet sind. Je nach Bedarf können daher Rollelemente unterschiedlicher Größe, Form und Materialbeschaffenheit verwendet werden.

Der Sicherheit während der Nutzung des Schlittens im Rollbetrieb dient eine Schlittenausführung, bei der jedem Rollelement wenigstens einer der Achsen eine betätigbare Bremse zugeordnet ist. Dabei umfaßt jede Bremse einen am zugeordneten Träger geführten, mittels Betätigungsorganen gegen das Rollelement vorschiebbaren Stempel, dessen freies Ende eine gegen das Rollelement preßbare Bremsbacke trägt. Als Betätigungsorgane können an sich bekannte Bowdenzüge mit Handbremshebeln vorgesehen sein, wobei die Handbremshebel an geeigneter Stelle am Schlitten befestigbar sind.

Damit eine Anpassung an Schlitten mit unterschiedlichen Abständen zwischen den Kufenholmen auf einfache Weise möglich ist, besteht jeder Träger aus gegeneinander längsverschiebbaren Abschnitten, beispielsweise teleskopartig ineinander geführten Profilen. Zur Feststellung der Abschnitte, bzw. zur Fixierung einer auf den Abstand zwischen Kufenholmen eingestellten Trägerlänge, sind Feststellorgane, z.B. Klemmschrauben, vorgesehen.

Ausführungsbeispiele, aus denen sich weitere erfinderische Merkmale ergeben, sind in der Zeichnung dargestellt. Es zeigen:
- Fig. 1: einen Querschnitt eines Schlittens mit Fahrwerk,
- Fig. 2: einen Querschnitt eines Schlittens mit einem Fahrwerk mit Bremsen,
- Fig. 3: einen Längsschnitt des Schlittens gemäß Fig. 2 mit in Rollbetriebstellung geschwenkten Achsen und
- Fig. 4: eine Ansicht der in Fig. 3 durch Einkreisung gekennzeichneten Einzelheit bei aus der Rollbetriebstellung herausgeklappter Stellung der Achse mit Rollelementen.

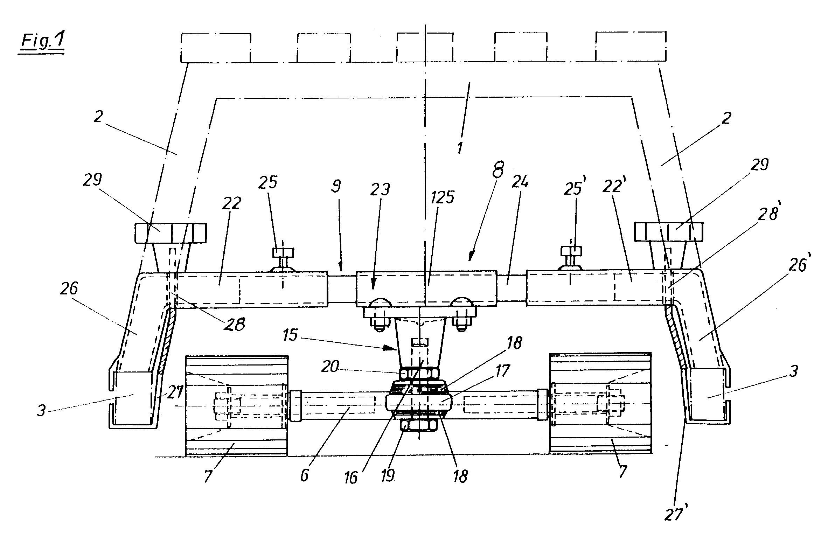

Fig. 1 zeigt einen Schlitten mit einem Sitz 1, unter welchem an Kufenstreben 2 gestützte Kufenholme 3 mit Kufen angeordnet sind.

Der Schlitten weist ein Fahrwerk auf, von dem eine Achse 6 mit einem darauf drehbar gelagerten Paar von Rollelementen 7 und eine Halterung 8 der Achse 6 zur Befestigung an den Kufenholmen 3 dargestellt ist.

An dem Träger 9 ist eine Aufhängung 15 für die Achse 6 befestigt. Die Aufhängung 15 weist als Kern einen Gewindebolzen 16 auf, der sich quer zur Achse 6 erstreckt. Auf den Gewindebolzen 16 ist ein Auge 17 eines Befestigungselementes der Achse 6 aufgeschoben, an dem beidseitig elastische Ringscheiben 18, die ebenfalls auf dem Gewindebolzen 16 angeordnet sind, anliegen. Die Ringscheiben 18 sind zusammen mit dem Auge 17 zwischen einem Kopf 19 des Gewindebolzens 16 und einer Kontermutter 20 eingespannt.

Der Träger 9 besteht aus drei gegeneinander längsverschiebbaren Abschnitten 22, 22' und 23, wobei der mittlere Abschnitt 23 eine Profilstange 24 mit einer daran befestigten Hülse 125 umfaßt, die mit der Aufhängung 15 fest verbunden ist. Die vorStehenden Enden der Profilstange 24 sind in die freien Enden der äußeren Abschnitte 22 und 22' teleskopartig eingeschoben und können mit Klemmschrauben 25 bzw. 25' festgesetzt werden. Die gegeneinander längsverschiebbaren und mittels der Klemmschrauben festsetzbaren Abschnitte ermöglichen eine Einstellung der Trägerlänge auf den Abstand zwischen den Kufenholmen 3 des Schlittens, dessen Sitzfläche 1 und Kufenstreben 2 durch strichpunktierte Linien angedeutet sind.

Die äußeren Abschnitte 22 und 22' des Trägers sind, wie dargestellt, nach unten abgekröpft. Das freie Ende der Abkröpfung ist als Festbacke 26 und 26' ausgebildet, welche bei an den Schlitten angesetztem Träger den Kufenholm 3 von oben übergreift. Eine den Kufenholm 3 untergreifende Losbacke 27 bzw. 27' weist ein Betätigungsorgan auf, das als am Träger geführte Spannschraube 28 bzw. 28' ausgebildet ist. Mit Hilfe des auf der Spannschraube 28 bzw. 28' sitzenden Gewindeknebels 29 läßt sich die Losbacke 27, 27' gegen die Festbacke 26,26' ziehen, wobei der jeweils zugeordnete Kufenholm 3 zwischen den Backen fest eingeklemmt wird. Der hier aus den Abschnitten 22, 22' und 23 bestehende Träger, der die Rollelemente 7 hält, ist dadurch mit dem Schlitten sicher verbunden.

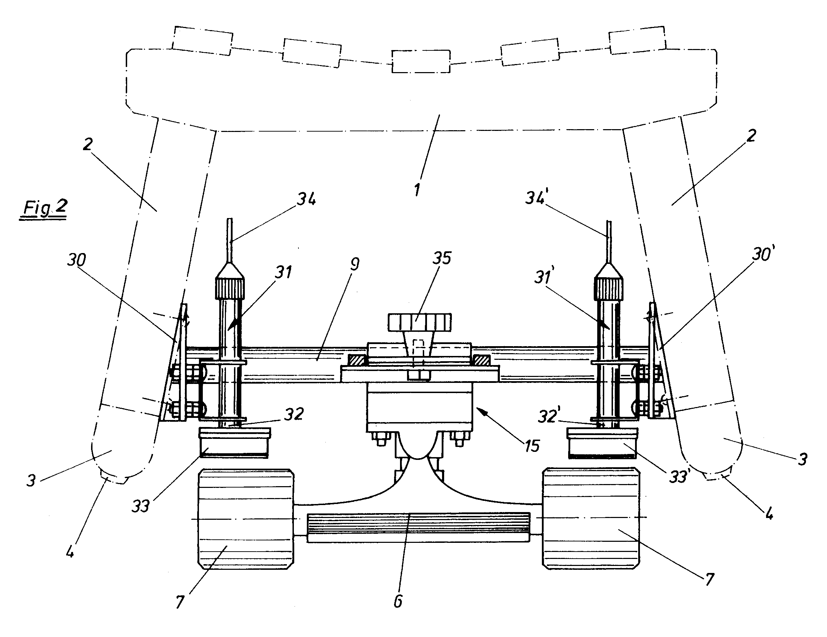

Fig. 2 zeigt einen Querschnitt eines Schlittens mit einem Fahrwerk und Bremsen. Bei der Ausführung gemäß Fig. 2 besteht der Träger 9 aus einem durchgehenden Rohr, das endseitig mit Halteplatten 30 bzw. 30' versehen ist, die an den Kufenstreben 2 befestigbar sind.

Die Halteplatten 30 und 30' dienen gleichzeitig zur Halterung einer Bremse 31 bzw. 31', die jedem Rollelement 7 zugeordnet ist. Jede Bremse umfaßt einen mittels Betätigungsorganen gegen das Rollelement 7 vorschiebbaren Stempel 32 und 32', dessen freies Ende mit einer gegen das Rollelement preßbaren Bremsbacke 33, 33' versehen ist. Die Betätigungsorgane sind an sich bekannte, hier lediglich schematisch angedeutete Bowdenzüge 34, 34'.

Die Aufhängung 15 für die Achse 6 mit den Rollelementen 7 ist am Träger 9 schwenkbar gehalten.

Mit 35 ist ein Feststellmittel bezeichnet, welches zur Arretierung der Aufhängung 15 in auf einem Kreisbogen um die Längsachse des Trägers liegenden Schwenkendstellungen dient.

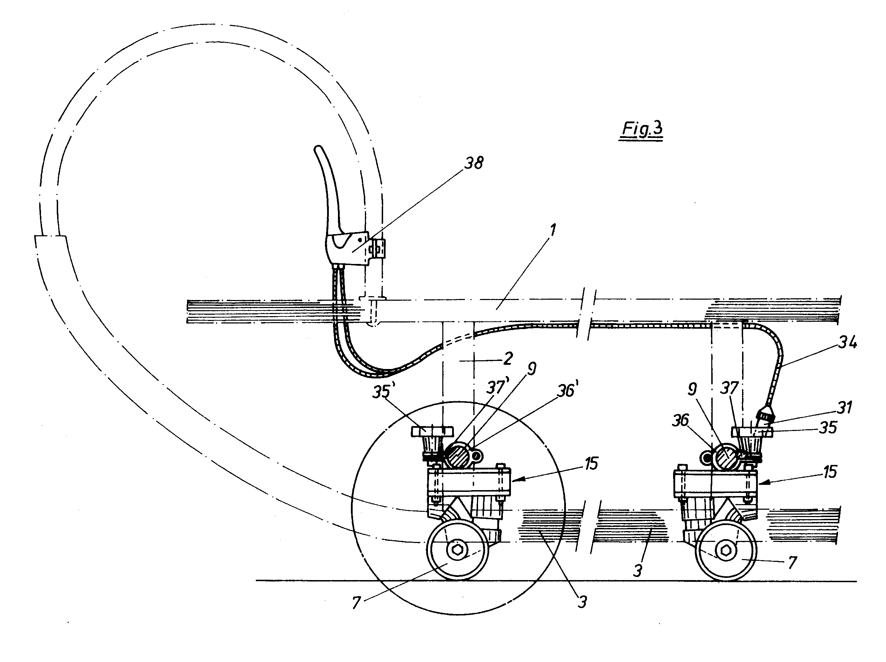

Fig. 3 zeigt einen Längsschnitt des Schlittens gemäß Fig. 2. Gleiche Bauteile sind mit gleichen Bezugszahlen bezeichnet. Fig. 3 läßt erkennen, daß jede Aufhängung 15 über eine Klemmschelle 36 bzw. 36', die um den Kreisquerschnitt aufweisenden Träger 9 gelegt ist, am Träger gehalten ist. Mit dem Feststellmittel 35 bzw. 35' läßt sich ein oberer Bügel der Klemmschelle 36, 36' gegen den unteren Bügel ziehen, so daß entsprechender Klemmdruck auf den Träger ausgeübt wird, durch den die Aufhängung 15 in Schwenkstellungen festgesetzt werden kann. Mit 37 ist ein Anschlag bezeichnet, der Schwenkendstellungen der Aufhängung 15 um den Träger 9 festlegt.

Fig. 3 läßt erkennen, wie Bowdenzüge 34 zu einem Handbremshebel 38 geführt sind, der bei Betätigung auf die den hinteren Rollelementen 7 des Schlittens zugeordneten Bremsen 31 wirkt.

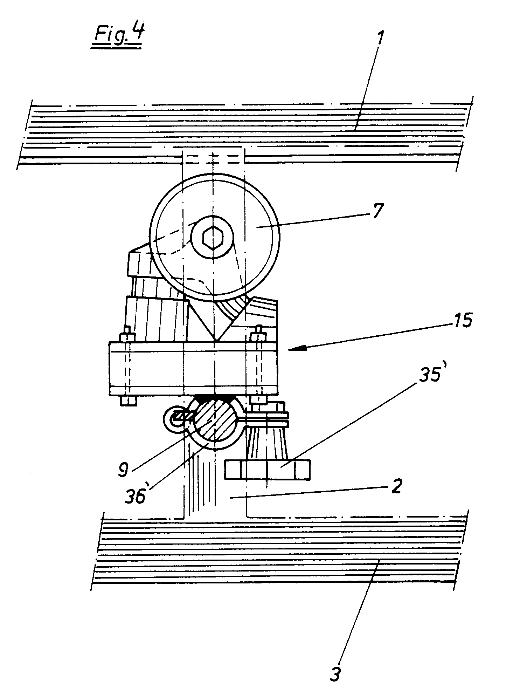

Fig. 4 zeigt die durch Einkreisung in Fig. 3 gekennzeichnete Einzelheit, jedoch ist gegenüber Fig. 6 hier die Aufhängung 15 um den Träger 9 geschwenkt, wobei die Rollelemente aus der in Fig. 3 dargestellten Rollbetriebsstellung gebracht sind. Gleiche Bauteile sind mit gleichen Bezugszahlen bezeichnet.

## Patentansprüche

1. Schlitten mit Kufen, insbesondere Rodelschlitten, mit einem lösbar angeordneten Fahrwerk mit drehbar gelagerten Rollelementen (7), deren Laufflächen aus der Kufenebene des Schlittens nach unten vorragen, wobei die Rollelemente (7) paarweise angeordnet sind und jeweils ein Paar von Rollelementen (7) auf einer gemeinsamen Achse (6) gelagert ist, die Achsen (6) der Paare von Rollelementen (7) in ihrem Abstand zueinander veränderbar angeordnet sind und jedes Paar von Rollelementen (7) lösbar am Schlitten über eine eigene Halterung (8) befestigbar ist, die einen sich quer zu den Kufen (4) erstreckenden längenverstellbaren Träger (9) aufweist, an dessen Unterseite die Achse (6) des Paares von Rollelementen (7) parallel zum Träger (9) angeordnet ist und der Träger (9) an seinen Enden jeweils ein als Klemme ausgebildetes Befestigungsorgan aufweist, wobei jede Klemme eine an jedem Ende des Trägers (9) angeordnete Festbacke (26,26') und eine bewegliche Losbacke (27,27') aufweist, die an den Kufenholmen (3) des Schlittens anlegbar sind und jede Klemme ein Betätigungsorgan zur Einstellung des Abstandes zwischen den Backen aufweist,
dadurch gekennzeichnet,
daß jede Achse (6) jeweils nur in ihrem mittleren Bereich an einem Punkt über eine Aufhängung (15) elastisch aufgehängt und um diesen Punkt kippbar ist, daß jede Aufhängung (15) an dem zugeordneten Träger (9) um den Träger (9) schwenkbar gehalten ist und daß Feststellmittel (35) zur Arretierung der Aufhängung (15) in Schwenkendstellungen vorgesehen sind.

2. Schlitten nach Anspruch 1, dadurch gekennzeichnet, daß jede Aufhängung (15) einen zu der an ihr befestigten Achse (6) quer verlaufenden, zu seinem der Achse (6) abgewandten Ende bezüglich der Lotrechten in Fahrtrichtung des Schlittens geneigten, bolzenförmigen Kern (Gewindebolzen 16) aufweist, auf den ein Auge (17) eines mit der Achse (6) verbundenen Befestigungselementes beweglich aufgeschoben ist und daß das Auge (17) zwischen zwei an ihm anliegenden, auf dem Kern sitzenden Ringscheiben (18) aus elastischem Werkstoff gehalten ist.

3. Schlitten nach Anspruch 2, dadurch gekennzeichnet, daß der Kern ein Gewindebolzen (16) ist, der an seinem freien Ende einen Kopf (19) aufweist, und daß die Ringscheiben (18) zusammen mit dem Auge (17) zwischen dem Kopf (19) des Gewindebolzens (16) und einer Kontermutter (20) eingespannt sind.

4. Schlitten nach einem der vorhergehenden Ansprüche, dadurch gekennzeichnet, daß die Rollelemente (7) walzenförmige Rollen sind.

5. Schlitten nach Anspruch 4, dadurch gekennzeichnet, daß die Rollelemente (7) auswechselbar angeordnet sind.

6. Schlitten nach einem der vorhergehenden Ansprüche, dadurch gekennzeichnet, daß jedem Rollelement (7) wenigstens einer der Achsen (6) eine betätigbare Bremse (31, 31') zugeordnet ist.

7. Schlitten nach Anspruch 6, dadurch gekennzeichnet, daß jede Bremse (31,31') einen am Träger (9) geführten, mittels Betätigungsorganen gegen das Rollelement (7) vorschiebbaren Stempel (32,32') umfaßt, dessen freies Ende eine gegen das Rollelement (7) preßbare Bremsbacke (33,33') trägt.

8. Schlitten nach Anspruch 7, dadurch gekennzeichnet, daß als Betätigungsorgane an sich bekannte Bowdenzüge (34, 34') mit Handbremshebeln (38) vorgesehen sind.

9. Schlitten nach einem der Ansprüche 1 bis 8, dadurch gekennzeichnet, daß der längenverstellbare Träger (9) aus gegeneinander längsverschiebbaren Abschnitten (22,22', 23) besteht.

10. Schlitten nach Anspruch 9, dadurch gekennzeichnet, daß zur Arretierung der Trägerabschnitte in einer vorbestimmten Schiebestellung Feststellorgane vorgesehen sind.

11. Schlitten nach Anspruch 9, dadurch gekennzeichnet, daß der Träger (9) aus teleskopartig ineinander geführten Profilabschnitten (22,22',23) besteht.

12. Schlitten nach den Ansprüchen 10 und 11, dadurch gekennzeichnet, daß als Feststellorgane Klemmschrauben (25,25') vorgesehen sind.

## Claims

1. A sledge with runners, in particular a toboggan, with a detachably arranged chassis with rotatably mounted rolling elements (7), whose running surfaces project downwards out of the plane of the runners of the sledge, wherein the rolling elements (7) are arranged in pairs and each pair of rolling elements (7) is mounted on a common axle (6), the axles (6) of the pairs of rolling elements (7) are arranged so as to be variable in their distance from one another, and each pair of rolling elements (7) can be fastened detachably to the sledge via its own mounting (8), which has a beam (9) which is adjustable in length and extends transversely to the runners (4), the axle (6) of the pair of rolling elements (7) being arranged on the underside of this beam (9) so as to be parallel thereto, and each end of the beam (9) having a fastening member formed as a clamp, wherein each clamp has a fixed jaw (26,26') arranged at each end of the beam (9) and a movable loose jaw (27,27'), which can be placed against the runner rails (3) of the sledge, and each clamp has an operating member for adjusting the distance between the jaws,
characterised in that each axle (6) is only suspended resiliently at one point in its central region via a suspension (15) and can be tilted about this point, in that each suspension (15) is held on the assigned beam (9) so as to pivot thereon, and in that locking means (35) are provided for securing the suspension (15) in the final pivoting positions.

2. A sledge according to Claim 1, characterised in that each suspension (15) has a bolt-shaped core (threaded bolt 16) which extends transversely to the axle (6) fastened to the suspension (15) and, towards its end facing away from the axle (6), is inclined relative to the vertical in the direction of travel of the sledge, an eye (17) of a fastening element connected to the axle (6) being slipped onto this bolt-shaped core so as to be movable, and in that the eye (17) is held between two annular discs (18) made of resilient material, which rest against the eye (17) and are mounted on the core.

3. A sledge according to Claim 2, characterised in that the core is a threaded bolt (16) which has a head (19) at its free end, and in that the annular discs (18) together with the eye (17) are clamped between the head (19) of the threaded bolt (16) and a counter nut (20).

4. A sledge according to any one of the preceding claims, characterised in that the rolling elements (7) are cylindrical rollers.

5. A sledge according to Claim 4, characterised in that the rolling elements (7) are arranged so as to be replaceable.

6. A sledge according to any one of the preceding Claims, characterised in that each rolling element (7) of at least one of the axles (6) is assigned an operable brake (31,31').

7. A sledge according to Claim 6, characterised in that each brake (31,31') comprises a plunger (32,32') which is guided on the beam (9) and can be advanced towards the rolling element (7) by means of operating members and whose free end carries a brake block (33,33') which can be pressed against the rolling element (7).

8. A sledge according to Claim 7, characterised in that Bowden wires (34,34'), which are known per se, with hand-brake levers (38) are provided as operating members.

9. A sledge according to any one of Claims 1 to 8, characterised in that the beam (9), which is adjustable in length, consists of portions (22,22',23) which are longitudinally displaceable relative to one another.

10. A sledge according to Claim 9, characterised in that locking members are provided for securing the beam portions in a predetermined position of displacement.

11. A sledge according to Claim 9, characterised in that the beam (9) consists of profiled sections (22,22',23) guided into one another like a telescope.

12. A sledge according to Claims 10 and 11, characterised in that clamping screws (25,25') are provided as locking members.

## Revendications

1. Luge à patins comportant un châssis roulant monté amovible avec éléments de roulement (7), montés tournants, dont les surfaces de roulement dépassent vers le bas du plan des patins, les éléments de roulement (7) étant montés par paire et chaque paire d'éléments de roulement (7) étant montée sur un essieu (6) commun, les essieux (6) des paires d'éléments de roulement (7) étant d'écartement variable et chaque paire d'éléments de roulement (7) pouvant être fixée de manière amovible sur la luge, par sa propre fixation (8), qui comporte un support (9), de longueur variable, s'étendant transversalement aux patins (4), sur la face inférieure duquel l'essieu (6) de la paire d'éléments de roulement (7) est monté parallèlement au support (9) et le support (9) comporte, à chacune de ses extrémités, un organe de fixation conçu en forme de pince, chaque pince présentant une mâchoire fixe (26, 26'), montée à chaque extrémité du support (9) et une mâchoire mobile (27, 27'), lesquelles peuvent s'appliquer contre le longeron des patins (3) de la luge et chaque pince comportant un organe d'actionnement en vue de régler la distance entre les mâchoires, caractérisée en ce que chaque essieu (6) n'est suspendu que dans sa zone centrale, en un point, de manière élastique, par une suspension (15) et peut basculer autour de ce point, en ce que chaque suspension (15) est maintenue sur le support (9) correspondant, de manière à pivoter autour de celui-ci et en ce qu'il est prévu des moyens de blocage (5) pour bloquer la suspension (15) dans des positions de fin de course de pivotement.

2. Luge selon la revendication 1, caractérisée en ce que chaque suspension (15) comporte un noyau en forme de boulon (boulon fileté 16) s'étendant transversalement à l'essieu (6), fixé sur cette suspension, incliné, à son extrémité opposée à l'essieu (6), par rapport à la verticale dans le sens de déplacement de la luge, noyau sur lequel est enfilé de manière mobile un oeillet (17) d'un élément de fixation, relié à l'essieu (6), et en ce que l'oeillet (17) est maintenu entre deux disques annulaires (18), en matière synthétique élastique, calés sur le noyau, s'appliquant contre cet oeillet.

3. Luge selon la revendication 2, caractérisée en ce que le noyau est un boulon fileté (16) qui comporte à son extrémité libre une tête (19) et en ce que les disques annulaires (18), avec l'oeillet (17), sont serrés entre la tête (19) du boulon fileté (16) et un contre-écrou (20).

4. Linge selon l'une des revendications précédentes, caractérisée en ce que les éléments de roulement (7) sont des roulettes en forme de rouleaux.

5. Luge selon la revendication 4, caractérisée en ce que les éléments de roulement (7) sont montés interchangeables.

6. Luge selon l'une des revendications précédentes, caractérisée en ce qu'à chaque élément de roulement (7) d'au moins l'un des essieux (6) est associé un frein (31, 31') actionnable.

7. Luge selon la revendication 6, caractérisée en ce que chaque frein (31, 31') comporte un piston (32, 32') guidé sur le support (9), pouvant être poussé au moyen d'organes d'actionnement, contre l'élément de roulement (7), piston dont l'extrémité libre porte une mâchoire de frein (33, 33') pouvant être pressée contre l'élément de roulement (7).

8. Luge selon la revendication 7, caractérisée en ce qu'il est prévu, comme organes d'actionnement, des câbles Bowden (34, 34') connus en soi avec leviers de freinage manuel (38).

9. Luge selon l'une des revendications 1 à 8, caractérisée en ce que le support (9) de longueur variable est constitué de tronçons (22, 22', 23) coulissant longitudinalement les uns par rapport aux autres.

10. Luge selon la revendication 9, caractérisée en ce que pour bloquer les parties du support dans une position de coulissement prédéterminée, il est prévu des organes de blocage.

11. Luge selon la revendication 9, caractérisée en ce que le support (9) est constitué de tronçons profilés (22, 22', 23) guidés de manière télescopique les uns dans les autres.

12. Luge selon les revendications 10 et 11, caractérisée en ce qu'il est prévu comme organes de blocage, des vis de serrage (25, 25').
